(19) Europäisches Patentamt
European Patent Office
Office européen des brevets

(11) **EP 2 264 826 A1**

(12) **EUROPEAN PATENT APPLICATION**
published in accordance with Art. 153(4) EPC

(43) Date of publication:
**22.12.2010 Bulletin 2010/51**

(51) Int Cl.:
**H01M 14/00** (2006.01)   **H01L 31/04** (2006.01)
**H01M 2/36** (2006.01)

(21) Application number: **09727035.9**

(22) Date of filing: **31.03.2009**

(86) International application number:
**PCT/JP2009/001517**

(87) International publication number:
**WO 2009/122733 (08.10.2009 Gazette 2009/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.04.2008 JP 2008097454**

(71) Applicant: **Fujikura, Ltd.**
**Tokyo 135-0042 (JP)**

(72) Inventors:
• **DOI, Katsuhiro**
  **Sakura-shi**
  **Chiba 285-8550 (JP)**
• **OKADA, Kenichi**
  **Sakura-shi**
  **Chiba 285-8550 (JP)**

(74) Representative: **HOFFMANN EITLE**
**Patent- und Rechtsanwälte**
**Arabellastraße 4**
**81925 München (DE)**

(54) **PHOTOELECTRIC CONVERSION ELEMENT MANUFACTURING METHOD**

(57)   The present invention provides a method of manufacturing a photoelectric conversion element that stably manufactures photoelectric conversion elements on a massive scale in an easy manner that can seal the electrolyte layer more reliably and suppress leakage of an electrolyte by having a structure, in which a working electrode, an counter electrode, and a bonding layer, which surround an electrolyte layer, are compressed by the atmospheric pressure all the time. The present invention provides a method of manufacturing a photoelectric conversion element that includes a working electrode, an counter electrode that is bonded to the working electrode through a bonding layer disposed in an outer periphery area of one surface of the working electrode, and an electrolyte layer that has an electrolyte arranged in a gap thereof as a main body, and is a manufacturing method of a photoelectric conversion element at least including: a step of forming the electrolyte layer by filling the gap with the electrolyte through a through hole that is disposed in the working electrode or the counter electrode in advance under a decompressed environment; and a step of acquiring the photoelectric conversion element by sealing the through hole while maintaining the decompressed environment.

FIG. 2

**Description**

**TECHNICAL FIELD**

The present invention relates to a method of manufacturing a photoelectric conversion element such as a dye-sensitized solar cell or the like.

**BACKGROUND ART**

As photoelectric conversion elements, for example, there are dye-sensitized solar cells capable of acquiring high photoelectric conversion efficiency at a low cost.

The dye-sensitized solar cell is roughly configured by: a working electrode that is configured by a transparent substrate formed from a light transmissive material such as a glass substrate or the like, and a transparent conductive film and a porous oxide semiconductor layer that are sequentially formed on one surface of the transparent substrate; an counter electrode that is configured by a substrate formed from an insulating material such as a glass substrate or the like and a conductive film formed on one surface of the substrate; and an electrolyte layer that is formed by gel or a liquid electrolyte enclosed therebetween.

Conventionally, such dye-sensitized solar cells are manufactured using a manufacturing method as represented below.

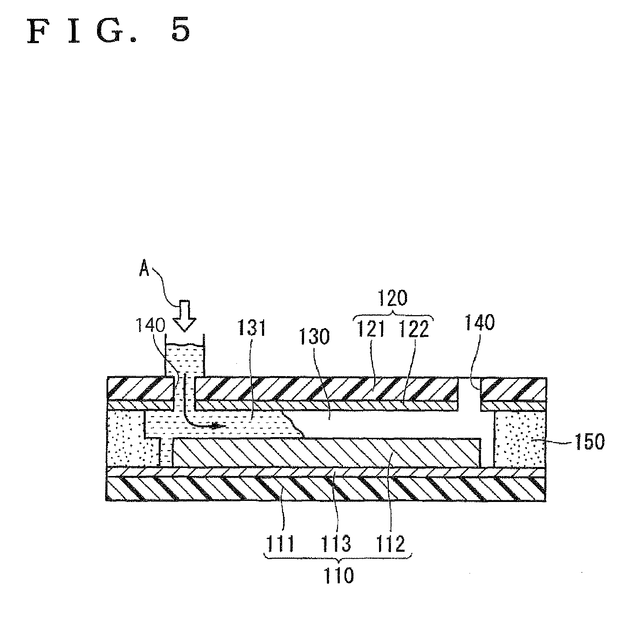

Fig. 5 is a cross-sectional view illustrating a conventional method of manufacturing a dye-sensitized solar cell.

First, a working electrode 110 including a transparent substrate 111, and a transparent conductive film 113 and a porous oxide semiconductor layer 112 that are sequentially formed on one surface of the transparent substrate 111 is formed, and a sensitizing dye is carried in the porous oxide semiconductor layer 112.

Thereafter, the working electrode 110, and an counter electrode 120 including a substrate 121 and a conductive film 122 formed on one surface of the substrate 121 are bonded together by using an adhesive agent 150 with a predetermined gap interposed therebetween so as to form a cell.

Thereafter, in the above-described cell, a space 130 between the working electrode 110 and the counter electrode 120 is filled with an organic electrolytic solution 131 from one through hole 140 out of two through holes 140 disposed in the counter electrode 120 in advance while applying pressure in the directions denoted by arrow A shown in Fig. 5 so as to form the electrolyte layer, whereby acquiring a dye-sensitized solar cell.

According to the method of manufacturing a dye-sensitized solar cell, a volatile solvent such as acetonitrile or the like is used as an electrolytic solution, this is enclosed in the cell, and there is a problem in that degradation in the cell characteristics occurs due to volatilization of the solvent in such a system. Thus, as a countermeasure thereof, there is an attempt using an ionic liquid as the electrolytic solution (see Non-Patent Document 1).

This ionic liquid is also termed ambient temperature molten salt and is salt that exists in a stable liquid phase in a broad temperature range including temperature around ambient temperature and is formed only from ions having positive and negative electric charges. This ionic liquid does not substantially has vapor pressure and does not have problems such as volatilization or ignition that may occur in a general organic solvent, and accordingly, is expected as a means for solving degradation in the cell characteristics due to volatilization.

In addition, in a case where an electrolytic solution is used, the electrolytic solution may leak at the time of manufacture or breakage of the cell, and as a countermeasure of the leakage of the solution, there are many attempts for gelling (pseudo solidification) the electrolytic solution by using an appropriate gelling agent (for example, see Patent Document 1). There is also a report that, when the electrolytic solution is gelled, the volatile property is suppressed, compared to a case where the electrolytic solution is in the liquid state. Similar attempts are made also for the ionic liquid, and the gelled ionic liquid (ion gel) has the characteristics of superior safety and durability.

However, in the above-described technology, even in a case where the volatile electrolytic solution, the ionic liquid, or both the volatile electrolytic solution and the ionic liquid are gelled, the dye-sensitized solar cell does not have sufficient durability, compared to an amorphous silicon solar cell. As one factor influencing the durability, there is leakage of the electrolytic solution. As one cause of the leakage, an increase in the internal pressure of the electrolytic solution at the time of completion of sealing of the volatile electrolytic solution may be considered in the volatile electrolytic solution, and such a leakage cannot be suppressed for a long period in the current sealing structure.

In addition, as technology relating to the photoelectric conversion element of such a type, in Patent Document 2, technology in which a space between the working electrode and the counter electrode is filled with the electrolytic solution from a through hole disposed in the counter electrode, and thereafter a distance between the electrodes is maintained to be constant by sucking out the electrolytic solution from the through hole is disclosed.

In addition, in this Patent Document 2, in addition to contents of the above-described technology, technology in which, after an electrolytic solution forming an electrolyte layer is enclosed between the working electrode and the counter electrode in the state in which the working electrode and the counter electrode are pressed in the thickness direction thereof, the pressure applied to the working electrode and the counter electrode is released is disclosed.

Furthermore, in Patent Document 3, as shown in Fig. 6, disclosed is a technology for acquiring a laminated body 270 by arranging an electrolyte layer 231 in a portion defined by a sealing member 250 on a first electrode 210 including a transparent substrate 211, and a transparent conductive film 213 and a porous oxide semiconductor layer 212 that are sequentially formed on one surface of the transparent substrate 211, and thereafter sealing the entire electrolytic layer 231 under decompression with the entirety of a second electrode 220 including a substrate 221 and a conductive film 222 formed on one surface of the substrate 221 .

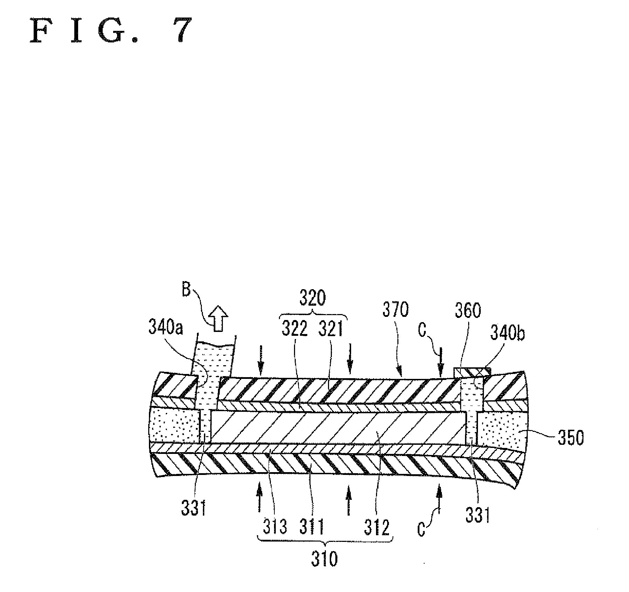

In addition, in Patent Document 4, as shown in Fig. 7, in a method of manufacturing a photoelectric conversion element that including a working electrode 310 having a transparent substrate 311, and a transparent conductive film 313 and a porous oxide semiconductor layer 312 that are sequentially formed on one surface of the transparent substrate 311; an counter electrode 320 having a substrate 321 and a conductive film 322 formed on one surface of the surface 321; and an electrolyte layer that is formed therebetween, technology for pressing a laminated body 370 configuring a photoelectric conversion element in the directions denoted by arrow C shown in Fig. 7 by filling a space between the working electrode 310 and the counter electrode 320 with an electrolytic solution 331 forming the electrolyte layer through through holes 340a and 340b disposed in the counter electrode 320, then sealing one through hole 340b, sucking out a part of the electrolytic solution 331 from the other through hole 340a in the direction denoted by arrow B shown in Fig. 7, sealing the other through hole 340a, and enclosing the electrolytic solution 331 between the working electrode 310 and the counter electrode 320 is disclosed. In Fig. 7, reference numeral 350 represents a sealing portion.

Patent Document 1: Japanese Patent Application Laid-Open (JP-A) No. 2002-184478
Patent Document 2: JP-A No. 2005-353295
Patent Document 3: JP-A No. 2007-220608
Patent Document 4: JP-A No. 2005-71973
Non-Patent Document 1: N.Papageorgiou et al., J. Electrochem. Soc., 143(10), 3099, 1996

## DISCLOSURE OF THE INVENTION

## PROBLEMS TO BE SOLVED BY THE INVENTION

Any of the technologies of above-described Patent Documents 2 to 4 relates to a sealing structure between the electrodes.

However, according to the technologies of sucking out the electrolytic solution disclosed in above-described Patent Documents 2 and 4, the electrolytic solution is sucked out under the atmospheric pressure, and accordingly, deformation between materials remains. In other words, excessive stress is applied to the interface between the counter electrode or the working electrode and the sealing portion. In addition, in order to form a desired decompressed state when the through hole is closed, decompression that is stronger than that required for the desired decompressed state needs to be performed when the electrolytic solution is sucked out. This is caused by the elasticity of a used structural body, that is, the counter electrode, the working electrode and a sealing member that connects both the counter electrode and the working electrode, and thus as a structural body having a higher elastic modulus is used, decompression that is much more stronger than that required for the desired decompressed state needs to be performed. In order to perform such a process, since stress that is stronger than necessary is applied to the interface between the counter electrode or the working electrode and the sealing portion, it is difficult to fully seal the laminated body, and the leakage of the electrolytic solution cannot be suppressed. In addition, according to the technologies of sucking out the electrolytic solution that are disclosed in above-described Patent Documents 2 and 4, a time is required for sucking out the electrolytic solution. Therefore, it is difficult to efficiently manufacture a dye-sensitized solar cell.

In addition, according to the methods of pressing the laminated body disclosed in Patent Documents 2 and 4, excessive stress is applied to the interface between the counter electrode or the working electrode and the sealing portion, whereby the sealing becomes insufficient.

On the other hand, according to the technology of Patent Document 3, since the sealing is performed with the entirety of the second electrode under decompression, the sealing area is increased, and accordingly, reliable sealing cannot be expected.

The present invention is contrived in consideration of the above-described situations, and the object thereof is to provide a method of manufacturing a photoelectric conversion elements that is capable of stably manufacturing the photoelectric conversion elements on a massive scale in an easy manner in which the sealing structure of the electrolyte layer is a structure (hereinafter, also referred to as a "negative-pressure structure") that is in a state of being compressed by the atmospheric pressure all the time and which is capable of sufficiently suppressing leakage of the electrolytic solution.

**MEANS FOR SOLVING THE PROBLEMS**

The present invention provides a method of manufacturing a photoelectric conversion element including a working electrode, an counter electrode that is bonded to the working electrode through a bonding layer disposed in an outer periphery area of one surface of the working electrode, and an electrolyte layer that has an electrolyte arranged in a gap thereof as a main body, the method at least comprising the steps of forming the electrolyte layer by filling the gap with the electrolyte through a through hole that is disposed in the working electrode or the counter electrode in advance under a decompressed environment; and acquiring the photoelectric conversion element by sealing the through hole while maintaining the decompressed environment.

According to the method of manufacturing a photoelectric conversion element of the present invention, the laminated body configured by the working electrode and the counter electrode that is bonded to the working electrode through the bonding layer disposed on the outer periphery area of one surface of the working electrode is placed in a decompressed environment, a gap between the working electrode and the counter electrode is filled with the electrolyte through a through hole disposed in the working electrode or the counter electrode in advance, and the through hole is sealed, whereby acquiring a photoelectric conversion element. Accordingly, stress that is stronger than necessary is not applied to the interface between the working electrode or the counter electrode and the bonding layer when the gap is filled with the electrolyte. In addition, when the photoelectric conversion element is taken out in the air, the electrolyte layer can have the negative-pressure structure for the outer air. As a result, according to the manufacturing method of the present invention, the atmospheric pressure is applied to the photoelectric conversion element from the outside, and accordingly, a state in which the working electrode and the counter electrode add the pressing force to the bonding layer is maintained. Since a place that is further sealed is the through hole, the sealing area is sufficiently smaller than the space surrounded by the bonding layer. Accordingly, the sealing of the electrolyte layer is performed in a more reliable manner, and a photoelectric conversion element capable of sufficiently suppressing leakage of the electrolyte can be obtained. In other words, since the obtained photoelectric conversion element has a structure that is sealed while receiving pressure from the outer sides of the bonding layer, the working electrode, and the counter electrode surrounding the electrolyte layer toward the inner side, the electrolyte layer is sealed in a more reliable manner, and whereby the leakage of the electrolyte can be prevented over a long period. In addition, since the filling of the electrolyte is performed under the decompressed environment, the operation of sucking out the electrolyte and the like are not needed, and accordingly, a time required for the filling of the electrolyte can be sufficiently decreased.

It is preferable that the pressure under the decompressed environment is controlled within a range equal to or higher than 50 Pa and less than 1013 hPa.

In a case where the above-described electrolyte contains a volatile solvent, it is preferable that the above-described pressure is in the range of 600 to 800 hPa.

In a case where the above-described electrolyte contains an ionic liquid, it is preferable that the above-described pressure is in the range of 500 to 700 hPa.

It is preferable that the above-described bonding layer contains at least one selected from a group consisting of an ionomer, an ethylene-vinyl acetate anhydride copolymer, an ethylene-metacrylic acid copolymer, an ethylene-vinyl alcohol copolymer, an ultraviolet curable resin, and a vinyl alcohol polymer. Since the above-described resins have superior sealing capability, leakage of the electrolyte can be effectively suppressed.

It is preferable that at least one electrode out of the working electrode and the counter electrode has flexibility. In such a case, when the photoelectric conversion element is taken out from the decompressed environment and is placed under the atmospheric pressure, the gap between the working electrode and the counter electrode can be decreased by allowing the working electrode and the counter electrode to be bent by the atmospheric pressure, compared to a case where both the working electrode and the counter electrode do not have flexibility. Accordingly, compared to a case where both the working electrode and the counter electrode do not have flexibility, the photoelectric conversion can be efficiently performed, and therefore, the photoelectric conversion efficiency is further improved.

It is preferable that any one electrode out of the working electrode and the counter electrode has flexibility that is higher than that of the other electrode, and the through hole is formed in the other electrode. When the through hole is formed in the one electrode, the one electrode is bent more than necessary, compared to a case where the through hole is not formed, and stress higher than necessary may be applied to the interface between the bonding layer and the one electrode. In contrast, when the through hole is formed in the other electrode having flexibility that is lower than that of the one electrode, in a case where the photoelectric conversion element is taken out from the decompressed environment and is placed under the atmospheric pressure, deformation of the one electrode can be decreased, thus the stress applied to the interface between the bonding layer and the one electrode can be further decreased, and accordingly, degradation in the adhesiveness on the interface can be suppressed more sufficiently.

The photoelectric conversion element according to the present invention is a photoelectric conversion element that includes a working electrode, an counter electrode that is bonded to the working electrode through a bonding layer disposed in an outer periphery area of one surface of the working electrode, and an electrolyte layer that has an electrolyte arranged in the gap thereof as its major body, the electrolyte is arranged inside a space that is closed by the sealing structure, and the internal pressure is in the range equal to or higher than 50 Pa and lower than 1013 hPa.

In addition, in the present invention, "the electrode has flexibility" represents that a maximum deformation rate exceeds 20% when both edge portions (each having a width of 5 mm) on the longer side of the sheet-shaped electrode of 50 mm x 200 mm are fixed to be horizontal with tension of 1 N under the environment of 20°C, and a weight of 20 g is applied to the center of the electrode. Here, the maximum deformation rate is a value calculated based on the following equation.

$$\text{Maximum Deformation Rate (\%) = 100} \times \text{(Maximum Displacement}$$

$$\text{Amount/Thickness of Sheet Electrode)}$$

Accordingly, in a case where a sheet-shaped electrode, for example, having a thickness of 0.04 mm is bent due to application of a weight as described above, and the maximum deformation amount is 0.01 mm, the maximum deformation rate becomes 25%, and this sheet-shaped electrode has flexibility.

## EFFECTS OF THE INVENTION

The present invention can provide a method of manufacturing a photoelectric conversion element that can stably manufacture photoelectric conversion elements that have a negative-pressure structure and can sufficiently suppress leakage of the electrolyte on a massive scale in an easy manner.

## BRIEF DESCRIPTION OF THE DRAWINGS

Fig. 1 is a schematic cross-sectional view illustrating a process according to a first embodiment of a manufacturing method of the present invention.
Fig. 2 is a schematic cross-sectional view illustrating another process according to the first embodiment of a manufacturing method of the present invention.
Fig. 3 is a schematic cross-sectional view illustrating still another process according to the first embodiment of a manufacturing method of the present invention.
Fig. 4 is a schematic cross-sectional view illustrating still another process according to the first embodiment of a manufacturing method of the present invention.
Fig. 5 is a cross-sectional view illustrating a conventional method of manufacturing a dye-sensitized solar cell.
Fig. 6 is a cross-sectional view illustrating a conventional method of manufacturing a dye-sensitized solar cell.
Fig. 7 is a cross-sectional view illustrating a conventional method of manufacturing a dye-sensitized solar cell.

## DESCRIPTION OF REFERENCE NUMERALS AND SYMBOLS

10, 110, 210, 310: WORKING ELECTRODE
11, 111, 211, 311: (TRANSPARENT) SUBSTRATE
12, 112, 212, 312: POROUS OXIDE SEMICONDUCTOR LAYER
20, 120, 220, 320: COUNTER ELECTRODE
31, 131, 231, 331: ELECTROLYTE
40, 340a, b: THROUGH HOLE
50, 150, 350: BONDING LAYER
60, 360: SEALING MEMBER
70, 270, 370: LAMINATED BODY

## BEST MODE FOR CARRYING OUT THE INVENTION

Hereinafter, a method of manufacturing a photoelectric conversion element according to the present invention will be described with reference to drawings.

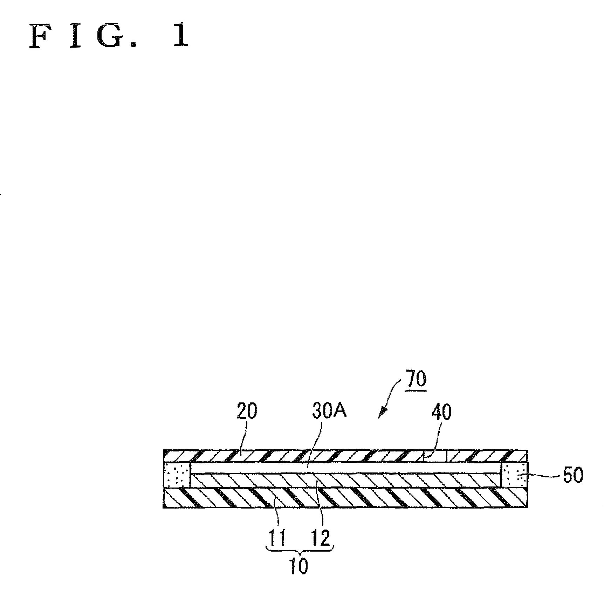

Figs. 1 to 4 are schematic cross-sectional views illustrating a series of processes in a method of manufacturing a dye-sensitized solar cell according to a first embodiment of the present invention.

In Figs. 1 to 4, reference numeral 10 denotes a working electrode, reference numeral 11 denotes a transparent substrate, reference numeral 12 denotes a porous oxide semiconductor layer, reference numeral 20 denotes an counter electrode, reference numeral 30 denotes an electrolyte layer, reference numeral 31 denotes an electrolyte, reference numeral 40 denotes a through hole, reference numeral 50 denotes a bonding layer, and reference numeral 60 denotes a sealing member.

In this embodiment, in order to manufacture a sensitized-dye solar cell, as represented in Fig. 1, first, the working electrode 10 including the transparent substrate 11, and a transparent conductive film (not shown in the figure) and a porous oxide semiconductor layer 12, which are sequentially formed on one surface of the transparent substrate 11 are formed, and sensitizing dye is carried on the surface of the porous oxide semiconductor layer 12.

In addition, the counter electrode 20 including the substrate 20 and a conductive film (not shown in the figure) formed on one surface of the substrate 20 is formed.

Thereafter, a laminated body 70 is formed by bonding surfaces of the working electrode 10 and the counter electrode 20 that face each other through the bonding layer 50. By forming this laminated body 70, a space (a space in which an electrolyte 31 is filled in a process of a later stage) 30A having a predetermined size is formed between the working electrode 10 and the counter electrode 20.

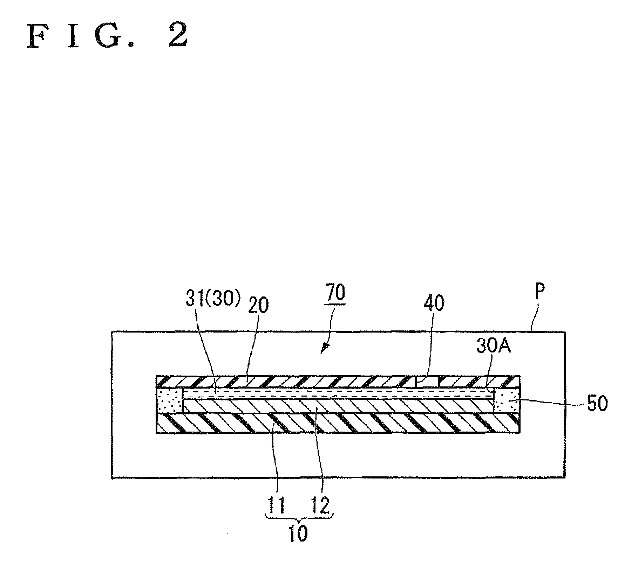

Thereafter, as represented in Fig. 2, the laminated body 70 and the electrolyte 31 are arranged inside a decompression chamber P. Then, the internal space of the decompression chamber P is decompressed. Then, under such a decompressed environment, by injecting the electrolyte 31 through the through hole 40 that is disposed in the counter electrode 20 in advance, most of the electrolyte 31 is impregnated in void parts of the porous oxide semiconductor layer 12, and the space 30A is filled with the electrolyte 31. Accordingly, an electrolyte layer 30 is formed inside the space 30A.

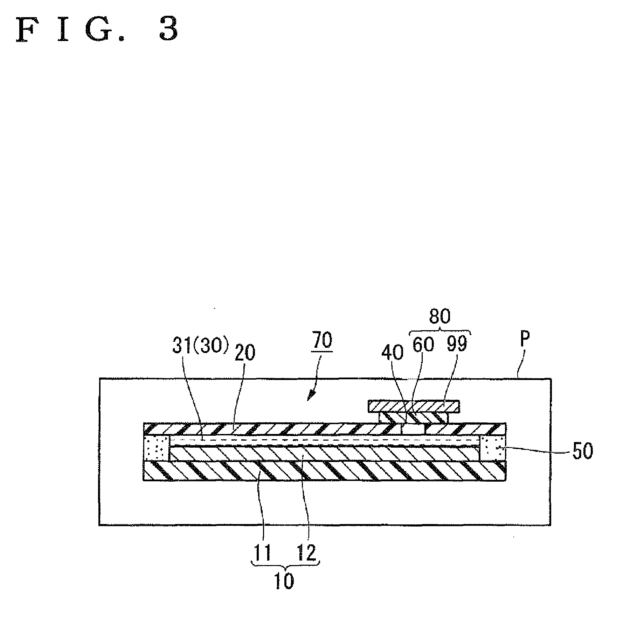

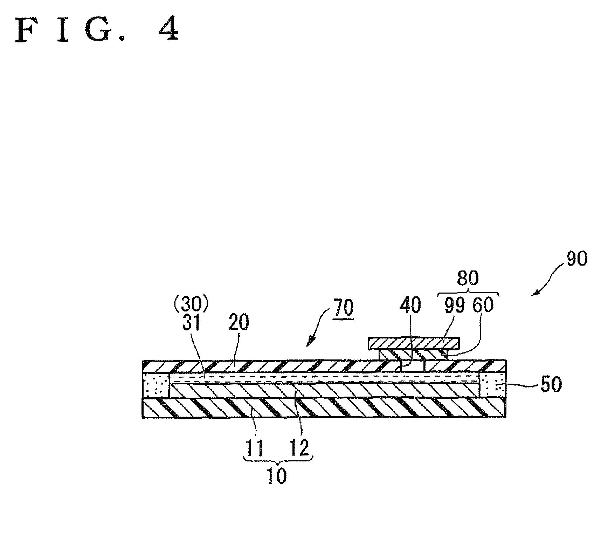

After the filling of the porous oxide semiconductor layer 12 and the space 30A with the electrolyte 31 is completed, as illustrated in Fig. 3, the through hole 40 is sealed by a sealing structure 80 under the above-described decompressed environment. By taking out the laminated body obtained as described above from the decompression chamber P, that is, from the decompressed environment into the atmospheric pressure, a dye-sensitized solar cell 90 is obtained (see Fig. 4).

As the transparent substrate 11 of the dye-sensitized solar cell 90 having the above-described configuration, a substrate that is formed from a light transmissive material is used. As the transparent substrate 11, any substrate formed from glass, polyethylene terephthalate, polyethylene naphthalate, poly carbonate, polyether sulfone, or the like that is commonly used as a substrate of a solar cell can be used. In addition, in order to implement a dye-sensitized solar cell having flexibility, a substrate that is formed from a flexible material is preferably used as the transparent substrate 11. As the substrate that is formed from a flexible material, commonly, a substrate that is formed from a synthetic resin is used, and, for example, a substrate that is formed from polyethylene terephthalate, polyethylene naphthalate, poly carbonate, polyether sulfone, or the like described above can be used.

The transparent conductive film (not shown in the figure) is a thin film that is formed on one surface of the transparent substrate for implementing conductivity of the transparent substrate 11, which is formed from metal, carbon, a conductive metal oxide, or the like.

In a case where a metal thin film or a carbon thin film is formed as the transparent conductive film, a structure that does not markedly deteriorate the transparency of the transparent substrate 11 is employed. As a conductive metal oxide that forms the transparent conductive film, for example, indium-tin oxide (ITO), tin oxide ($SnO_2$), fluorine-doped-tin-oxide (FTO), or the like is used.

The porous oxide semiconductor layer 12 is disposed on the transparent conductive film. A semiconductor that forms the porous oxide semiconductor layer 12 is not particularly limited, and any semiconductor that is commonly used for forming a porous semiconductor used for a solar cell can be used. As such a semiconductor, for example, titanium oxide ($TiO_2$), tin oxide ($SnO_2$), tungsten oxide ($WO_3$), zinc oxide (ZnO), niobium oxide ($Nb_2O_5$), or the like can be used.

As a method of forming the porous oxide semiconductor layer 12, for example, a method in which, after the transparent conductive film is coated with paste containing nanoparticles of the above-described semiconductor, the coated transparent conductive film is fired so as to form the porous oxide semiconductor layer, may be used, but the method is not limited thereto.

As sensitizing dye, a ruthenium complex that includes a bipyridine structure, a terpyridine structure, or the like as a ligand, a metal-containing complex such as porphyrin, phthalocyanine, or the like, or organic dye such as eosin, rhodamine, merocyanine, or the like can be used. From among such materials, sensitizing dye showing an excitation behavior that is appropriate for use and the used semiconductor can be selected without any particular limitation.

The counter electrode 20 does not need to have, particularly, light transparency, and accordingly, a metal plate, a synthetic resin plate, or the like is used as the counter electrode 20. As the counter electrode 20, the same substrate as the transparent substrate 11 may be used. In addition, in order to implement a dye-sensitized solar cell having flexibility, as the substrate, a substrate formed from a flexible material is preferably used. As a substrate that is formed from a flexible material, commonly, a synthetic resin plate is used. As such a synthetic resin plate, for example, there is a substrate that is formed from polyethylene terephthalate, polyethylene naphthalate, poly carbonate, polyether sulfone, or the like. In addition, a metal foil can have flexibility. As such a metal foil, there is a titanium foil, a nickel foil, or a platinum foil.

The conductive film (not shown in the figure) is a thin film, which is formed from metal, carbon, or the like, formed on one surface of the counter electrode so as to implement the conductivity of the counter electrode 20. As the conductive film, although a film which is obtained by forming, for example, a layer of carbon, platinum, or the like by vapor deposition, sputtering or a heat-processing after the application of platinum chloride acid is appropriately used, the conductive film is not particularly limited as long as it serves as an electrode.

It is preferable that at least one electrode of the working electrode 10 and the counter electrode 20 has flexibility. In such a case, the working electrode 10 and the counter electrode 20 can be easily positioned close to each other. In other words, a gap between the working electrode 10 and the counter electrode 20 is decreased in an easy manner. Accordingly, compared to a case where both the working electrode 10 and the counter electrode 20 do not have flexibility, photoelectric conversion is performed more efficiently, whereby the photoelectric conversion efficiency is further improved.

The bonding layer 50 is not particularly limited as long as it has superior adhesiveness for the transparent conductive film and the conductive film, but an ionomer, an ethylene-vinyl acetate anhydride copolymer, an ethylene-metacrylic acid copolymer, an ethylene-vinyl alcohol copolymer, an ultraviolet curable resin, or a vinyl alcohol polymer is preferably used, which has high sealing capability and can suppress the leakage of the electrolyte 31 effectively. These may be used in a single form or in a combination of two or more. Particularly in a case where the transparent conductive film and the conductive film are formed from metal, it is preferable that the bonding layer 50 has superior adhesiveness for metal. As an adhesive agent that has superior adhesiveness for metal, an adhesive agent formed from a thermoplastic resin having a carboxyl group or a hydroxyl group in a molecular chain or the like is preferable, and specifically, there are Himilan (manufactured by Mitsui-Du Pont Polychemicals Co., Ltd.), Bynel (manufactured by Mitsui-Du Pont Polychemicals Co., Ltd.), Nucrel (manufactured by Mitsui-Du Pont Polychemicals Co., Ltd.), Evalr (manufactured by Curaray Co., Ltd.), and the like. In addition, in a case where an adhesive agent that is formed from a thermoplastic resin having a hydroxyl group is used as the above-described adhesive agent, it is more preferable that a surface oxidation process such as a corona treatment, or an UV ozone process or the like is performed appropriately for the surface of the adhesive agent. In such a case, the hydroxyl group is substituted with a carboxyl group, and accordingly, adhesiveness for metal is improved.

The sealing structure 80 is a structure that seals the through hole 40 and is configured by a sealing member 60 and a sealing reinforcing member 99 that reinforces the sealing of the sealing member 60. This sealing structure 80 fills the space 30A of the laminated body 70 with the electrolyte 31 through the through hole 40 under pressure that is lower than the atmospheric pressure and seals the through hole 40 by using the sealing member 60 and the sealing reinforcing member 99 under the reduced pressure. Accordingly, when the dye-sensitized solar cell obtained as described above is taken out under the atmospheric pressure, the sealing structure 80 seals the electrolyte layer 30 in a reliable manner by forming a state in which the atmospheric pressure is applied to the working electrode 10, the counter electrode 20, and the bonding layer 50 in the directions of the opposing surfaces all the time so as to strongly fix the entirety thereof for preventing deformation between materials, whereby leakage of the electrolyte 31 can be prevented over a long period.

The sealing member 60, as described above, seals the through hole 40, and thus the material thereof is selected for reliable sealing. This sealing member 60 is not particularly limited, as long as it has superior adhesiveness for the counter electrode 20. As the sealing member 60, for example, an ionomer, an ethylene-vinyl acetate anhydride copolymer, an ethylene-metacrylic acid copolymer, an ethylene-vinyl alcohol copolymer, an ultraviolet curable resin, or a vinyl alcohol polymer can be used. These may be used in a single form or in a combination of two or more. Among them, an adhesive agent that is formed from a thermoplastic resin having a carboxyl group or a hydroxyl group in a molecular chain is preferable. As the sealing member 60, specifically, there are Himilan (manufactured by Mitsui-Du Pont Polychemicals Co., Ltd.), Bynel (manufactured by Mitsui-Du Pont Polychemicals Co., Ltd.), Nucrel (manufactured by Mitsui-Du Pont Polychemicals Co., Ltd), Evalr (manufactured by Curaray Co., Ltd.), and the like. In addition, Aron Alpha (manufactured by Toagosei Co., Ltd.) other than the thermoplastic resin can be appropriately used. By using these, the sealing reinforcing member 99 is bonded to the counter electrode 20.

The sealing reinforcing member 99 may be formed from any material as long as it reinforces the sealing of the sealing member 60, and, for example, an inorganic material such as a glass substrate (cover glass) or a metal plate or the like, or an organic material such as polyethylene terephthalate, polycarbonate or the like that does not have flexibility may be used. Here, the material that does not have flexibility represents a material that does not conform to a definition that is obtained by substituting "electrode" with "material" in the description of the above-described definition of "the electrode has flexibility".

In addition, the sealing structure 80 does not necessarily need to include the sealing reinforcing member 99 and may be configured only by the sealing member 60.

As the electrolyte 31, an electrolytic solution in which an electrolyte component such as iodine, an iodide ion, tertiary butyl pyridine or the like is dissolved in an organic solvent such as ethylene carbonate, methoxy acetonitrile, acetonitrile, methoxy propionitrile, propionitrile, ethylene carbonate, propylene carbonate, diethyl carbonate, γ-butyrolactone or the like, ionic liquid, a gel electrolyte, or the like is used.

As the above-described ionic liquid, ambient temperature molten salt that is known iodine salt such as pyridinium salt, imidazolium salt, or triazolium salt and is in a molten state at ambient temperature is used. As such ambient temperature molten salt, for example, 1-ethyl-3-methyl-imidazolium bis (trifluoromethyl sulfonyl) imide is appropriately used.

As examples of the above-described gel electrolyte, there are ionic gels obtained by adding a gelling agent to the above-described ionic liquid or a gel electrolyte obtained by adding a gelling agent to the above-described electrolytic solution.

As examples of the above-described gelling agent, there are organic gelling agents such as polyvinylidene fluoride, a polyethylene oxide derivative, and an aminoacid derivative and the like and a gel-phase material that is formed by adding fine particles such as nanocomposite gel or the like. As the nanocomposite gel, there are nanoparticles of, for example, $SiO_2$, $TiO_2$, or a carbon nanotube or the like.

In addition, the electrolyte 31 may be configured by an ionic liquid electrolyte that is formed from a composite of an ionic liquid and a volatile component. Here, as examples of the volatile component, there are the above-described organic solvents, 1-methyl-3-methyl imidazolium iodide, LiI, $I_2$, 4-t-butyl pyridine and the like.

As described above, in this method of manufacturing the photoelectric conversion element, after the laminated body 70 and the electrolyte 31 are arranged inside the decompression chamber P, the internal space of the decompression chamber P is decompressed, and the space 30A of the laminated body 70 is filled with the electrolyte 31 under the decompressed environment, the through hole 40 is sealed. Accordingly, the electrolyte 31 is enclosed inside the dye-sensitized solar cell 90 with pressure that is lower than the atmospheric pressure, and the electrolyte layer 30 is in the environment of negative pressure. Accordingly, when the dye-sensitized solar cell 90 is taken out under the atmospheric pressure, the working electrode 10, the counter electrode 20, and the bonding layer 50 are in the state in which the atmospheric pressure is applied in the directions of the surfaces thereof opposing each other, and the entirety thereof is strongly fixed so as to prevent deformation between materials. Accordingly, the electrolyte layer 30 is sealed in a reliable manner, and leakage of the electrolyte 31 can be prevented over a long period. In other words, according to the above-described manufacturing method, a method of manufacturing a photoelectric conversion element that is capable of stably manufacturing photoelectric conversion elements, which can sufficiently suppress leakage of the electrolyte 31, on a massive scale in an easy manner can be provided.

At that time, the pressure of the inside of the decompression chamber P is usually in the range equal to or higher than 50 Pa and lower than 1013 hPa, is preferably in the range of 50 Pa to 800 hPa, and is more preferably in the range of 300 to 800 hPa.

Particularly, in a case where the organic solvent contained in the electrolyte 31 is a volatile solvent, it is preferable that the pressure of the inside of the decompression chamber P is in the range of 600 to 800 hPa. When the pressure is within the above-described range, compared to a case where the pressure is out of the above-described range, volatilization of the organic solvent is further suppressed when the space 30A of the laminated body 70 is filled with the electrolyte 31, and the working electrode 10, the counter electrode 20, and the bonding layer 50 of the obtained dye-sensitized solar cell 90 are more strongly fixed to each other, whereby it is difficult for leakage of the electrolyte 31 to occur.

In addition, in a case where the electrolyte 31 contains an ionic liquid, the ionic liquid does not volatilize, and the pressure of the decompression chamber P does not need to be set high in consideration of the volatilization of the electrolyte 31 unlike a case where the electrolyte 31 contains a volatile solvent. Accordingly, the pressure of the inside of the decompression chamber P may be in the range of 500 to 700 hPa.

Furthermore, in a case where the electrolyte 31 contains a gel electrolyte, the pressure of the inside of the decompression chamber is different between cases where the major component of the precursor to be gelled is the volatile type or the non-volatile type. The pressure is preferably in the range of 600 to 800 hPa for a case where the major component of a precursor is a volatile type and is preferably in the range of 500 to 700 hPa for a case where the major component of the precursor is an ionic liquid type. Accordingly, in a case where the electrolyte 31 contains a gel electrolyte, it is preferable that the pressure of the inside of the decompression chamber P is in the range of 500 to 800 hPa.

In addition, according to the dye-sensitized solar cell 90, since it is manufactured by using the above-described manufacturing method, it is able to obtain a dye-sensitized solar cell that includes the working electrode 10, the counter electrode 20 that is bonded to the working electrode 10 through the bonding layer 50 disposed in an outer periphery area on one surface of the working electrode 10, and the electrolyte layer 30 that includes the electrolyte 31 arranged in the gap thereof as its main body, and that has a structure in which the electrolyte 31 is arranged inside a space closed by the sealing structure 80 and the internal pressure is in the range equal to or higher than 50 Pa and lower than 1013 hPa. In other words, the electrolyte 31 is in the structure in which the electrolyte 31 is sealed by receiving pressure from the outer sides of the working electrode 10, the counter electrode 20, and the bonding layer 50, which surround the electrolyte 31, toward the inner side, and accordingly, the electrolyte layer 30 is sealed more reliably, whereby leakage of the electrolyte 31 can be prevented over a long period. As a result, a dye-sensitized solar cell 90 having superior photoelectric conversion efficiency over a long period can be obtained.

The present invention is not limited to the above-described embodiment. For example, although the through hole 40 is formed only in the counter electrode 20 in the above-described embodiment, the through hole 40 may be formed in the working electrode 10. However, for example, in a case where the counter electrode 20 is an electrode which does not have flexibility, and the working electrode 10 is an electrode having flexibility, the through hole 40 is preferably formed in the counter electrode 20. When the through hole 40 is formed in the working electrode 10, the working electrode 10 is bent more than necessary, compared to a case where the through hole 40 is not formed, accordingly, there is a concern over application of stress, which is higher than necessary, to the interface between the bonding layer 50 and the working electrode 10. In contrast, when the through hole 40 is formed in the counter electrode 20 having flexibility that is lower than that of the working electrode 10, in a case where the dye-sensitized solar cell 90 is taken out from the decompressed environment and is placed under the atmospheric pressure, the bending of the working electrode 10 can be decreased, and the stress applied to the interface between the bonding layer 50 and the working electrode 10 can be decreased further, whereby degradation in the adhesiveness on the interface can be more sufficiently suppressed.

**Examples**

Hereinafter, the present invention will be described more specifically with reference to examples, but the present invention is not limited to the following examples.

(Example 1)

As a transparent substrate, FTO was used, the FTO was coated with paste of oxide titanium nanoparticles so as to cover the surface of the FTO and to have a thickness of 10 $\mu$m by using a doctor blade method, and then was fired at 150°C for three hours, whereby a porous oxide semiconductor layer was formed.

Thereafter, a working electrode was obtained by carrying an N719 dye in the porous oxide semiconductor layer. In addition, by using the same FTO as that used in manufacturing the working electrode, a thin film formed from platinum was formed on this transparent conductive film by a sputtering method, whereby an counter electrode was obtained.

Thereafter, two through holes were formed in the counter electrode. Thereafter, a quadrangle-shaped polymer film (trade name: Himilan, manufactured by Mitsui-Du Pont Polychemicals Co., Ltd.), which was formed from a thermoplastic resin having a width of 2 mm and a thickness of 50 $\mu$m and has a quadrangular hole formed on the center thereof, was arranged in an peripheral edge of the working electrode or the counter electrode as an adhesive agent (bonding layer), and the working electrode and the counter electrode overlapped with each other through a polymer film formed from the thermoplastic resin so as to form a space having a predetermined size therebetween.

Thereafter, the polymer film was heated and melted so as to bond the working electrode and the counter electrode together, thereby forming a laminated body. That is the manufacturing method of the basic configuration.

Following the above-described manufacturing process of the basic configuration, the laminated body and a container, in which an electrolyte having methoxy propionitrile as its major solvent and containing 0.1 M of lithium iodide, 0.05 M of iodine, and 0.5M of 4-tert-buthyl pyridine was inserted, were arranged inside the decompression chamber, the pressure of the decompression chamber was decompressed up to 700 hPa, the space between the working electrode and the counter electrode was filled with the electrolyte through a through hole disposed in the counter electrode, and most of the electrolyte was impregnated in void parts of the porous oxide semiconductor layer. After the filling of the electrolyte was completed, inside the decompression chamber, the through holes were covered with a polymer resin (trade name: 31x-101, manufactured by ThreeBond Co., Ltd.), the polymer resin was cured by irradiating ultraviolet rays so as to seal the through holes, and the laminated body was taken out from the inside of the decompression chamber, whereby a dye-sensitized solar cell was obtained.

(Examples 2 to 8)

In Examples 2 to 8, as shown in Table 1, dye-sensitized solar cells were obtained in the same manner as that of Example 1 except that Himilan, Saran, Nucrel, and Evalr were used as the polymer film, and 31X-101 or butyl caulking was used as the polymer resin. In addition, in a case where the through holes were sealed by butyl caulking, ultraviolet rays were not irradiated onto the butyl caulking.

(Comparative Example 1)

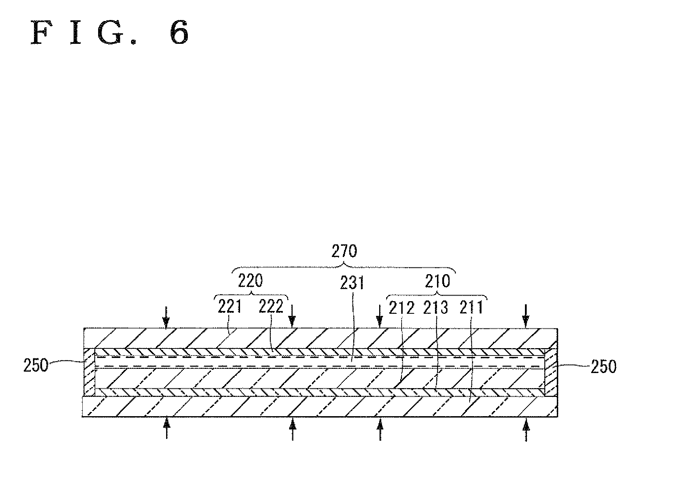

A Comparative Examples for Examples of the present invention will be described with reference to Fig. 6.

Following the above-described manufacturing process of the basic configuration, a laminated body 270 was sandwiched with pressure of 15 kg/100 cm$^2$, from the outer side of the working electrode 210 and the counter electrode 220 by a pressing member (not shown in the figure) formed from one pair of silicon rubber plates and, in this state, a space between the working electrode 210 and the counter electrode 220 was filled with the electrolyte 231 through a through hole (not shown in the figure) disposed in the counter electrode 220, whereby most of the electrolyte 231 was impregnated in void parts of the porous oxide semiconductor layer 212. After the filling of the electrolyte 231 was completed, the through hole was sealed by a sealing member (not shown in the figure) with the pressure applied to the laminated body 270 by the pressing member.

Thereafter, the pressure applied to the working electrode 210 and the counter electrode 220 by the pressing member was gradually released, and finally the pressing member was detached, whereby a dye-sensitized solar cell was obtained.

(Comparative Examples 2 to 4)

In Comparative Examples 2 to 4, as shown in Table 1, dye-sensitized solar cells were obtained in the same manner as that of Comparative Example 1 except that Himilan or Saran was used as the polymer film, and 31X-101 or butyl caulking was used as the polymer resin.

(Comparative Example 5)

Furthermore, a comparative example for Examples of the present invention will be described with reference to Fig. 7.

Following the above-described manufacturing process of the basic configuration, a laminated body 370 was sandwiched with pressure of 15 kg/100 cm$^2$, from the outer side of the working electrode 310 and the counter electrode 320 by a pressing member (not shown in the figure) formed from one pair of silicon rubber plates and, in this state, a space between the working electrode 310 and the counter electrode was filled with the electrolyte solution 331 through through holes 340a and 340b disposed in the counter electrode, whereby most of the electrolyte solution 331 was impregnated in void parts of the porous oxide semiconductor layer 312.

Thereafter, one of the two through holes 340a and 340b was sealed by the sealing member 360.

Thereafter, a part of the electrolyte solution 331 filled in the space between the working electrode 310 and the counter electrode 320 was sucked out by using a vacuum pump in the direction denoted by arrow B shown in Fig. 7 from the through hole 340a that was not sealed by the sealing member 360, whereby the space was decompressed. Then, the working electrode 310 and the counter electrode 320 are pushed in the directions (the directions denoted by arrow C shown in Fig. 7) of surfaces opposing each other by the atmospheric pressure, and as a result, the laminated body 370 was contracted in this direction, whereby a distance between the working electrode 310 and the counter electrode 320 was shortened. In this process, although a part of the excess electrolyte solution 331 was sucked out from the through hole 340a, the electrolyte solution 331 was sucked out while maintaining the state in which the void parts of the porous semiconductor layer 312 were fully filled with the electrolyte solution 331. The decompression was performed until differential pressure for the atmospheric pressure becomes about 200 hPa, in other words, until the absolute pressure becomes about 813 hPa.

Thereafter, by adjusting the amount of air flowing between the vacuum pump and the through hole 340a, the through hole 340a that was used for sucking out the electrolyte solution 331 was sealed by a sealing member (not shown in the figure) formed from a polymer resin represented in Table 1 while maintaining the state in which the space between the working electrode 310 and the counter electrode 320 was decompressed, whereby an electrolyte layer was formed between the working electrode 310 and the counter electrode 320. Thereafter, the vacuum pump was stopped, whereby a dye-sensitized solar cell was obtained.

(Comparative Examples 6 to 8)

In Comparative Examples 6 to 8, dye-sensitized solar cells were obtained in the same manner as that of Comparative Example 5 except that Himilan or Saran was used as the polymer film, and 31X-101 or butyl caulking was used as the polymer resin, as represented in Table 1. In addition, in a case where the through holes were sealed by butyl caulking, ultraviolet rays were not irradiated onto the butyl caulking.

For the dye-sensitized solar cells obtained in Examples 1 to 4 and Comparative Examples 1 to 8, differences in the degradation rates of the conversion efficiency and the leakage amounts of the electrolyte in Examples 1 to 4 and Comparative Examples 1 to 8 were checked based on the criteria of Evaluation Methods 1 and 2. The result was represented in Table 1.

In addition, in Evaluation Method 1, under the static condition of 85°C, 85%, and RH1000h, a case where the degradation rate of the conversion efficiency was equal to or lower than 50% was denoted by "A", and a case where the degradation rate of the conversion efficiency was equal to or higher than 50% was denoted by "B".

In addition, based on a test of an outer appearance seen from a lighting portion, a case where the leakage amount of the electrolyte was equal to or less than 50% of the inter-cell volume was denoted by "A", and a case where the leakage amount of the electrolyte was equal to or higher than 50% of the inter-cell volume was denoted by "B".

[Table 1]

|  | Polymer film (bonding layer) | Polymer resin (sealing member) | Evaluation 1 | Evaluation 2 |
|---|---|---|---|---|
| Example 1 | Himilan | 31x-101 | A | A |
| Example 2 | Himilan | Butyl caulking | A | A |
| Example 3 | Saran | 31x-101 | A | A |
| Example 4 | Saran | Butyl caulking | A | A |
| Example 5 | Nucrel | 31x-101 | A | A |
| Example 6 | Nucrel | Butyl caulking | A | A |
| Example 7 | Evalr | 31x-101 | A | A |
| Example 8 | Evalr | Butyl caulking | A | A |
| Comparative Example 1 | Himilan | 31x-101 | B | B |
| Comparative Example 2 | Himilan | Butyl caulking | B | B |
| Comparative Example 3 | Saran | 31x-101 | B | B |
| Comparative Example 4 | Saran | Butyl caulking | B | B |
| Comparative Example 5 | Himilan | 31x-101 | B | B |
| Comparative Example 6 | Himilan | Butyl caulking | B | B |
| Comparative Example 7 | Saran | 31x-101 | B | B |
| Comparative Example 8 | Saran | Butyl caulking | B | B |

Based on the result represented in Table 1, in the dye-sensitized solar cells of Examples 1 to 8 according to the present invention, it was confirmed that the leakage amount of the electrolyte was low, and the degradation rate of the photoelectric conversion efficiency was decreased. On the other hand, in the dye-sensitized solar cells of Comparative Examples 1 to 8 according to conventional decompression or compression method, it was confirmed that the leakage amount of the electrolyte was high, and the degradation rate of the photoelectric conversion efficiency was increased.

**Claims**

1.  A method of manufacturing a photoelectric conversion element including a working electrode, an counter electrode that is bonded to the working electrode through a bonding layer disposed in an outer periphery area of one surface of the working electrode, and an electrolyte layer that has an electrolyte arranged in a gap thereof as a main body, the method at least comprising the steps of:

    forming the electrolyte layer by filling the gap with the electrolyte through a through hole that is disposed in the working electrode or the counter electrode in advance under a decompressed environment; and
    acquiring the photoelectric conversion element by sealing the through hole while maintaining the decompressed environment.

2.  The method of manufacturing a photoelectric conversion element according to Claim 1,
    wherein pressure under the decompressed environment is controlled within a range equal to or higher than 50 Pa and less than 1013 hPa.

3. The method of manufacturing a photoelectric conversion element according to Claim 2,
   wherein the electrolyte contains a volatile solvent,
   and
   the pressure is in the range of 600 to 800 hPa.

4. The method of manufacturing a photoelectric conversion element according to Claim 2,
   wherein the electrolyte contains an ionic liquid, and the pressure is in the range of 500 to 700 hPa.

5. The method of manufacturing a photoelectric conversion element according to any one of Claims 1 to 4,
   wherein the bonding layer contains at least one selected from a group consisting of an ionomer, an ethylene-vinyl acetate anhydride copolymer, an ethylene-metacrylic acid copolymer, an ethylene-vinyl alcohol copolymer, an ultraviolet curable resin, and a vinyl alcohol polymer.

6. The method of manufacturing a photoelectric conversion element according to any one of Claims 1 to 5,
   wherein at least one electrode out of the working electrode and the counter electrode has flexibility.

7. The method of manufacturing a photoelectric conversion element according to any one of Claims 1 to 5,
   wherein any one electrode out of the working electrode and the counter electrode has flexibility that is higher than that of the other electrode, and
   the through hole is formed in the other electrode.

# F I G . 1

F I G. 2

# F I G. 3

F I G. 4

# FIG. 5

# F I G. 6

# F I G. 7

| INTERNATIONAL SEARCH REPORT | International application No. |
|---|---|
| | PCT/JP2009/001517 |

A. CLASSIFICATION OF SUBJECT MATTER
*H01M14/00*(2006.01)i, *H01L31/04*(2006.01)i, *H01M2/36*(2006.01)i

According to International Patent Classification (IPC) or to both national classification and IPC

B. FIELDS SEARCHED

Minimum documentation searched (classification system followed by classification symbols)
H01M14/00, H01L31/04, H01M2/36

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-59181 A (Sony Corp.), 08 March, 2007 (08.03.07), Claims; Par. Nos. [0073] to [0092] (Family: none) | 1-7 |
| X | JP 2007-242544 A (Sony Corp.), 20 September, 2007 (20.09.07), Claims; Par. Nos. [0080] to [0101] (Family: none) | 1-7 |
| Y | JP 2007-157490 A (Sharp Corp.), 21 June, 2007 (21.06.07), Claims; Par. Nos. [0075] to [0098]; Fig. 7 (Family: none) | 1-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June, 2009 (29.06.09) | 07 July, 2009 (07.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

| INTERNATIONAL SEARCH REPORT | International application No. |
|---|---|
| | PCT/JP2009/001517 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-353295 A  (Fujikura Ltd.),<br>22 December, 2005 (22.12.05),<br>Claims; Par. Nos. [0021] to [0028]<br>(Family: none) | 1-7 |

Form PCT/ISA/210 (continuation of second sheet) (April 2007)

**INTERNATIONAL SEARCH REPORT**

International application No.

PCT/JP2009/001517

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

    In order to satisfy the requirement of unity of invention, the inventions of claims should be so linked as to form a single general inventive concept by a special technical feature. The inventions of claims 1-7 are linked only by the technical feature disclosed in claim 1.
    However, the technical feature cannot be a special technical feature since it is disclosed in the prior art documents such as Document 1: JP 2007-59181 A (Sony Corp.), 08 March, 2007 (08.03.07) and Document 2 JP 2007-242544 A (Sony Corp.), 20 September, 2007 (20.09.07).
    (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/001517

<u>Continuation of Box No.III of continuation of first sheet(2)</u>

Accordingly, there exists no special technical feature to link the inventions of claims 1-7 to form a single general inventive concept. For this, it is obvious that the inventions of claim 1-7 do not satisfy the requirement of unity of invention. The inventions are divided into at least two groups of inventions.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002184478 A
- JP A A
- JP 2005353295 A
- JP 2007220608 A
- JP 2005071973 A

**Non-patent literature cited in the description**

- **N.Papageorgiou et al.** *J. Electrochem. Soc.,* 1996, vol. 143 (10), 3099